# EUROPEAN PATENT APPLICATION

(11) **EP 1 898 645 A1**
(43) Date of publication of application: **12.03.2008**
(21) Application number: 06300935.1
(22) Date of filing: 07.09.2006
(51) Int. Cl.: H04N 7/173, H04N 5/445

(54) **Specific broadcast service when roaming**

(71) Applicant: GEMPLUS, 13420 Gémenos (FR)
(72) Inventor: Praden, Anne-Marie, 13122 Ventabren (FR); Brugal, Hervé, 13008 Marseille (FR)

(57) **Abstract**

The invention relates to a method to allow an end-user (USER) of a specific broadcast service to use this service when travelling after he registered to a specific broadcast service provided by a foreign operator (OP2), at home operator (OP1) before travelling. This foreign operator (OP2) builds ESG service for this specific broadcast service and broadcasts this service to the end-user once the home operator (OP1) sent to the foreign operator (OP2) identifiers and programs content.

## Description

The invention relates to the use of a specific broadcast service when travelling, based on mobile TV, a recent technology currently in deployment where the end-user could watch TV on his mobile communication device, such as mobile phone.

Operators use dedicated resources such as a TV broadcast server, a mobile telecommunication network, broadcast servers and remote server storing secrets. In order to be able to bill the service, operators also use personal tokens for authenticating the end-user who uses a mobile TV service.

The personal tokens are generally UICC cards (Universal Integrated Circuit(s) Card). Those cards could content a SIM application (Subscriber Identification Module) when the terminal is a mobile phone connected to a GSM/GPRS (Global System for Mobile communications / General Packet Radio Service) network, or a USIM (Universal Subscriber Identity Module), RUIM (Removable User Identity Module) or ISIM (IP Subscriber Identity Module) or EAP-SIM (Extensible Authentication Protocol) application when the mobile associated to the token is a 3GPP one of UMTS or even UTRAN type or a Third generation one (3GPP2) of CDMA 2000 type. Such tokens are typically compliant with international standard ISO7816.

The personal tokens could also be MMC (Multi-Media Card), or SD (Secure Digital) or USB (Universal Serial Bus).

The personal tokens could also be USB key, mass memory card, or any kind of token carrying some necessary credentials.

We know among other networks, the DVB (Digital Video Broadcasting), DAB (Digital Audio Broadcasting), DMB (Digital Multimedia broadcasting), ISDB-T (Integrated Services Digital Broadcasting - terrestrial), and MBMS (Mobile Broadcast Multicast Service), which have in common the fact that they are used for data broadcasting.

A broadcast channel implemented through such networks contains more or less services according to the bandwidth available for the data transmission.

End-users connected to the network are able to receive the services if such services are available for all, broadcasted in clear or if they have subscribed to such services.

Each country has its own services distributed by the operator(s).

The services may be broadcasted in anyone of several possible languages that the end-user may select in an Electronic Service Guide (ESG) that is proposed to the end-user on his terminal.

Such ESG allows for the end-user the discovery of services available on the network.

This service is either broadcasted and then available for every end-user either sent on a point-to-point network (3G network for example) on end-user request.

For the analog TV at home, the program guide is broadcasted on the "teletext" service. For the digital TV at home, the program guide is called EPG "Electronic Program Guide" but is similar to ESG.

The name ESG is now used for the digital TV for mobile devices but is only slightly different from the guide proposed on the Digital TV for home.

The fundamental difference lies on the fact that the ESG is transmitted in IP (Internet Protocol) packets for the new networks for Mobile TV. EPG, which is the transport link for TV at home, is in contrary a service transmitted in MPEG2 transport packets.

ESG is a kind of paper magazine for the TV programs in electronic form that contains information on programs among others as listed below:
- Program name
- Operator identifier who broadcasts the data (Canal+, TPS...)
- Start and end broadcast time
- Parental rating of the program
- Program's synopsis
- Actors
- Critics
- URL links to other information that could be acquired on other channel (a mobile telephony point-to-point channel for example)
- Technical information for the terminal to acquire the giving program (for example retrieve the address in the broadcast network).

This information is transmitted in "metadata" and transmitted in "containers" that are updated when some data are modified.

In the terminal, an engine acquires the data, possibly stores them and transmits them to a graphic engine that will organize the data for display on the end-user request.

Thanks to this ESG, the end-user will choose the program he wants to watch or consume.

An ESG bootstrap operation allows the terminal to know which ESGs are available and how to acquire them.

In this ESG bootstrap, the terminal discovers in descriptor (ESGProviderDiscovery Descriptor, for ESG specified for IP datacast over DVB-H for example), the ESG providers that deliver ESGs in a given IP platform. With the Provider Identifier found in this descriptor, the terminal is able to parse another descriptor (ESGAccessDescriptor) to boot the ESG of the specific provider.

This mechanism allows the transmission of several ESG in an IP platform.

There is a way in the Mobile TV system to select the language of the services so that, when the end-user travels he could see the services proposed with the adequate language. But in case of roaming, the end-user is able to see programs from service providers of the visited country only.

The program that the end-user is used to watch in his country are typically not broadcasted in foreign countries. The end-user is then no more able to watch news services or serial broadcasted in his country and with he is accustomed to.

An ordered TV end-user is sometimes a fondness for some specific programs (Serial, news for example) and he doesn't want to loose the following episode or the important news of their country.

Arrived in foreign country, he's then no more able to retrieve his favorite programs. The end-user is able to see programs from service providers of the visited country only.

### Prior art

Currently the problem is to allow an end-user to use such a mobile TV service even when travelling abroad.

To that purpose, prior art consists of broadcasting a dedicated service for each foreign country. This is the case for example in traditional TV where the Channel "La Cinq" is broadcasted in European countries enabling French speaking people to watch this program in different European countries.

And, based on the Broadcast technology, when an end-user travels and stays in a hotel, he is sometimes able to watch some programs on the TV set that are broadcasted on a continent such as "Arte" for example.

The network could be overloaded with services intended to a minority of people and even the programs proposed could be not suitable to end-users travelling in this country and accustomed to some purely national programs. In other words, this solution is not fully appropriate as the end-user cannot follow his preferred soap he's used to watch when at home.

Another known solution is called "TV on demand" where the end-user is able to receive services or programs on the 3G network using the Video on demand feature. The end-user sends a request to his home operator to receive a specific program using an IP connection over the 3G. The operator then answers with the transmission of the video program on the 3G network. The drawback of this solution is the cost of using the 3G network and the saturation of the network if numerous requests are transmitted. It's well adapted for short sequences of important video such as goals in a match but it's not suitable with long videos.

The usual roaming of voice and SMS capabilities services in GSM world is a well known solution as well. The end-user is able to get voice and SMS capabilities services of his home operator when he travels abroad. Operators have some roaming partnership around the world. If the terminal is no more in an area covered by the home network, using the Preferred Public Land Mobile Network, the terminal searches the new network. Then when the terminal is connected to the new network, the request of voice and SMS capabilities from the end-user is transmitted by the visited operator to the home operator which is then granted.

### Technical problem

Despite the benefits of such a scheme, it appears that the end-user cannot see his preferred TV programs but only a global program (generally a mixed of the most popular worldwide TV shows).

From another point of view, the foreign operator OP2 cannot dedicate his broadcast capabilities to broadcast specific programs to a few end-users for economic reasons.

The home operator OP1 cannot on the other hand use more powerful broadcast systems to be able to broadcast abroad for logistics and profitability reasons. The invention brings a solution to this problem.

Another problem is the time difference.

In such respect it is a main purpose of the invention to provide a way for the end-user to have a look at his preferred mobile TV programs even when abroad.

This purpose is achieved by way of the invention as recited in the appended claims.

### Figures description

Other purposes, benefits and aspects of the invention will appear through the following description, which is made in reference to the appended figures, among which:
Figure 1 depicts a terminal set in a network associated with a personal token according to a preferred embodiment of the invention,
Figure 2 is a diagram which represents a method implemented by the system described by figure 1, method of providing specific broadcast service such as TV programs to the end-user when abroad according to the invention.

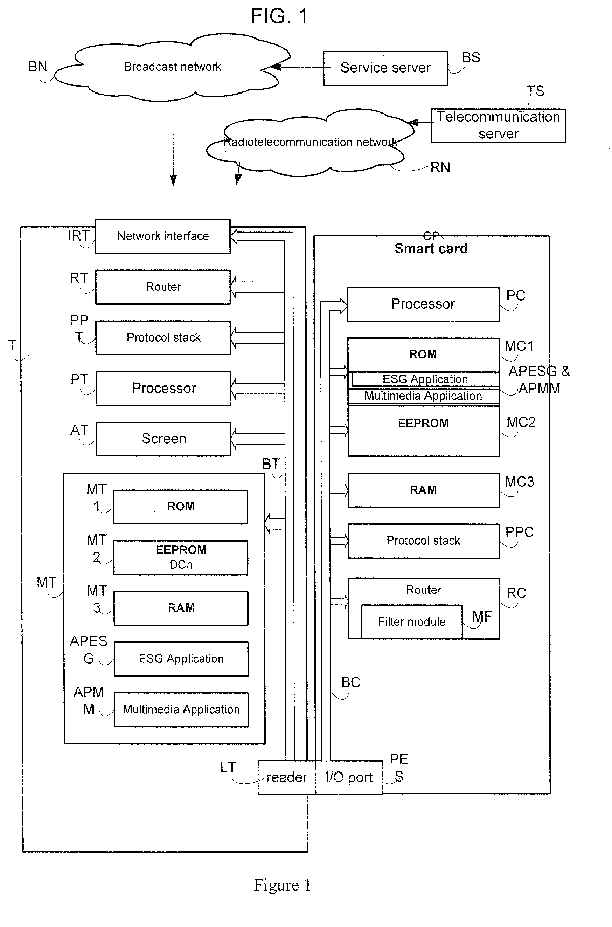

A preferred embodiment will now be described in the context of a telecommunication network and in relation to a terminal for access to such Mobile TV service via networks, as depicted schematically on figure 1.

Terminal T is made of IRT, a radio telecommunication and a broadcast network interface, a processor PT, a man-machine interface, memories MT. The several elements of the terminal are linked together by a bidirectional bus BT. Memories MT1, MT2 and MT3 include among other ESG application APESG and multimedia application APMM.

Terminal T is also equipped with a central processing unit PT, keyboard or other input device such as microphone, or biometric reader, and display unit AT, and with an IC card reader LT. Such IC card reader LT is linked and/or embedded into the other parts of the terminal T.

Such terminal T is linked to a radio telecommunication network RN connected to a set of other terminals and connected also to a remote server TS. Server TS typically stores dedicated applications and secret information which can be read by remote computers if an authorized end-user makes use of a personal token such as a smart card CP. To that purpose the personal card CP carries some necessary credentials which are challenged by the remote server S during what is called an authentication session.

Terminal T is also linked to a broadcast network BN connected to a set of other terminals and connected also to a remote server BS. Server BS typically stores TV broadcast dedicated applications and secret information which can be sent and used by remote computers if an authorized end-user makes use of a personal card such as card CP. To that purpose the personal card CP carries some necessary mobile TV dedicated credentials which are challenged by the remote server BS during what is called an authentication session when the end-user wants to use the mobile TV services.

The smart card CP is a smart card MMC (Multi-Media Card), or SD (Secure Digital) or USB (Universal Serial Bus) or UICC (Universal Integrated Circuit(s) Card). The smart card CP is as an example a card with a dedicated application SIM (Subscriber Identity Module) in case the terminal T is a mobile linked to a GSM/GPRS (Global System for Mobile communications / General Packet Radio Service) network, or a USIM (Universal Subscriber Identity Module) application, RUIM (Removable User Identity Module) or ISIM (IP Subscriber Identity Module) or EAP-SIM (Extensible Authentication Protocol), when the terminal T is a mobile compliant with Third generation telecommunication standards (3GPP) of UMTS or UTRAN, or of CDMA 2000 type (3GPP2) .

The smart card CP includes mainly a processor PC, or several processors, memories blocks MC1 to MC3. The smart card exchanges data with terminal T via I/O port PES and reader LT (using contact or contactless mode).

Memory MC1 includes a ROM or flash memory where operating system is stored. Memory MC2 is a non volatile memory such as EEPROM or Flash to store keys, identity numbers, and other parameters and credentials linked to the end-user such as PIN code. Memory MC3 is a RAM or SRAM memory dedicated to data management. Processor PC, memories MC1, MC2, MC3 and PES port are linked together by the BC bidirectional bus.

This invention is not restricted to a radio mobile terminal linked to a smart card. The smart card can be as well a smart card linked to a personal computer linked to a mobile terminal or directly linked to a network, a credit card, an e-purse, a healthcare card, a loyalty card, an e-passport or every additional card linked to a terminal.

For other embodiments, this invention concerns other communicating devices as well such as personal communicating devices (PDA), gaming devices (gaming station) or smart TV set (Portable Multimedia Player).

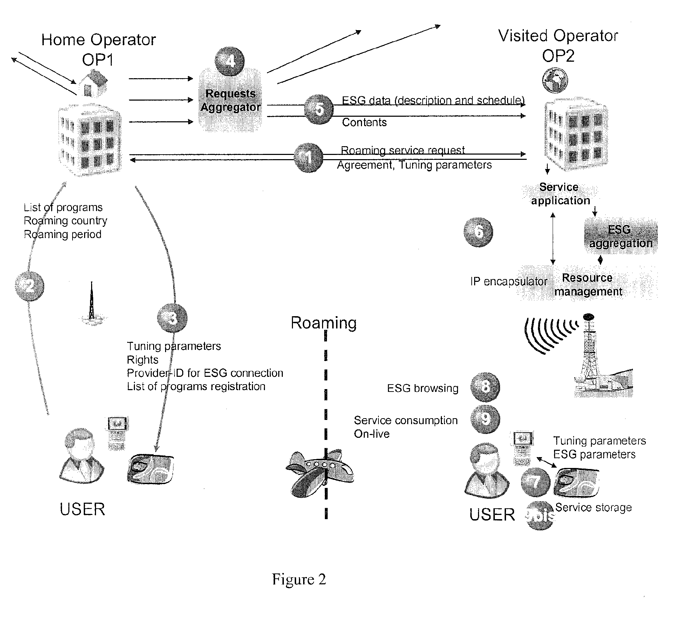

The method used to implement this solution is described in figure 2 and will be developed below:

### Invention

To this purposes, the invention consists of using a method to allow an end-user (USER) of a mobile broadcast network to use his specific broadcast service when travelling characterized in that it comprises the following steps where:
- As shown in step 2 of figure 2, the end-user registers to a specific broadcast service by his home operator OP1. This is generally done before the end-user leaves the home operator network, that means before the terminal of the end-user has left the home communication network. This can be done after the home operator OP1 as signed an official agreement with the foreign operator OP2 and exchanged some dedicated technical parameters such as tuning parameters as exposed in step 1 figure 2,
- The home operator OP1 sends to the end-user's token, data including the dedicated technical parameters related to said specific broadcast service as described in step 3 of figure 2,
- The home operator OP1 sends to foreign operator OP2 data related to said specific broadcast service as described in step 5 of figure 2,
- Foreign operator OP2 builds an ESG for the said specific broadcast service and delivers the ESG to the end-user as shown in step 6 of figure 2.

The home operator OP1 sends to foreign operator OP2, as described in step 5 of figure 2, among others data, its identifier (Operator_ID (OP1)), the name of the specific broadcast service (service_ID), a list of Identifier for each program (Program_ID) specific broadcast service, and the content of each one of programs of the specific broadcast service.

In step 6 of figure 2, the foreign operator OP2 builds then an ESG service for said specific broadcast service. The receiver of the end-user then at the starting up connects itself to the ESG bootstrap, and the new ESG could then be proposed to the end-user. The acquisition of the ESG data of the home operator OP1 service then begins.

The foreign operator OP2 can also build an ESG for said specific broadcast service except signaling information and then the foreign operator OP2 builds a specific ESG for the home operator OP1 adding the signaling information given by an IP encapsulator of the said specific broadcast service and adds in its ESG bootstrap the signaling of this specific ESG with an identifier of home operator OP1 (Operator_ID, or provider_ID or ESG_provider_ID) provided by home operator OP1.

To this purpose, the invention consists as well of using such a method to allow an end-user of a broadcast network to use his Mobile TV service when travelling in a foreign country on a system comprising the following entities:
- A terminal T hosting a memory equipment such as a personal token,
- A foreign operator OP2 in the foreign country providing Mobile TV service and comprising an ESG building module,
- The ESG building module of the foreign operator OP2 taking as an input some data which originate from the home broadcast network, said data relating to a specific broadcast service the end-user has registered to for the purpose of being broadcasted in the foreign country.

When an end-user plans to travel in a foreign country, he then registers itself (using the 3G network or a point to point network) to a specific service at his home operator OP1 before his travel. This service proposes a list of programs that the end-user could receive in the foreign country on-line or in a "PODCasting" way.

The registration could be made using a dedicated page of the home operator OP1 portal or using a dedicated application sorted into the personal token of the end-user. This application is able to communicate with the home operator OP1 using classical OTA (Over the Air) communication means such as SMS (short message system) or data channels and provides menus to help the end-user to register. Those menus could propose a list of programs, asks for timing periods...

The end-user then selects the programs in the list of programs, gives the roaming country and gives the timing period during which it will be able to receive the programs as shown in step 2 of figure 2. The home operator OP1 could then send a receipt as described in step 3 of figure 2, with some parameters allowing an automatic connection to the appropriate ESG stream when the roaming will be effective. This receipt could be sent via the 3G network by, among others methods used to send data through any kind of telecommunication network to the token, SMS (short message system), data channel or even using the BIP (Bearer Independent Protocol) channel. Parameters could be stored directly in the smart card.

The home operator OP1 can proceed to an aggregation of all requests of the different end-users as described in the step 4 of figure 2 and builds a service containing the different programs with the adequate scheduling. Then the home operator OP1 sends to its partner, the foreign operator OP2 in the foreign country, parameters such as place of the end-user's roaming, its identifier (Operator_ID (OP1)), the name of the service (service_ID), the list of Identifier for each program (Program_ID), the scheduling data and the content of the service.

The foreign operator OP2 gets then all the information from home operator OP1 to build an ESG service for this new roaming service except the technical part of the ESG (signaling information in the IP (Internet Protocol) network: IP @).

The foreign operator OP2 builds then a specific ESG for this home operator OP1 (or uses an already existing ESG built by the home operator OP1) adding the technical information given by its own IP encapsulator (IP@ of the new service) and adds in its ESG bootstrap the signaling of this new ESG with the identifier of home operator OP1 (Operator_ID, or provider_ID or ESG_provider_ID) provided by the home operator OP1.

During a roaming in the foreign country, the receiver of the end-user then connects itself at the starting up to the ESG bootstrap, and the new ESG is proposed to the end-user as shown in steps 7 and 8 of figure 2. The acquisition of the ESG data of the home operator OP1 service then begins. The ESG acquisition could be automatic without end-user selection using the parameters in the Smart card that the home operator OP1 sent during the registration process.

If the number of programs is large so that it could be not possible to broadcast the service using only one IP address, the service can be split on several IP addresses.

Some data are transmitted to the foreign operator, after selection by the end-user in the ESG. This data include identifiers of the specific broadcast service as selected by the end-user. These data may also include content of the specific broadcast service, at this step or in an afterwards transmission.

The end-user is able to watch the registered services on-live as shown in step 9 of figure 2 (or re-broadcasting) if the scheduling is appropriate to his availability. The registered service could also be stored in the smart card as described into step 9bis of figure 2, (in the large memory part of the smart card) automatically using the list of programs stored in the smart card during the registration process. The end-user then watches the service off-line when he wants to.

The programs could be delivered free to air or in another embodiment, in an encrypted form. If they are delivered in encrypted form, the key (generally traffic keys) used to encrypt the service is delivered by the foreign operator OP2 using messages including keys such as roaming ECM (Entitlement Control Messages) described in the IP Datacast over DVB-H: Service Purchase and Protection ETSI specification (TS102474) in the Annex A (Open Security Framework). Those Roaming ECMs are standard ECM that could be opened by different CAS systems (Conditional Access Systems). The end-user that registered for the service receives rights for the service using for example an EMM (Entitlement Management Message). Key (conveyed by the ECM) that encrypts the service could then be retrieved by the CAS system in the smart card of the end-user. After this step, the service is accessible to the registered end-users only and could be considered as an added value service that the home operator OP1 sells to the end-user.

## Claims

1. A method to allow an end-user of a mobile broadcast network (BN) to use his specific broadcast service when travelling **characterized in that** it comprises:
• The end-user registers (step 2) to a specific broadcast service by his home operator (OP1),
• The foreign operator (OP2) receives data related to said specific broadcast service (step 5),
• The foreign operator (OP2) delivers the said specific broadcast service to the end-user (Step 6)

2. The method according to claim 1 **characterized in that** it comprises:
■ The end-user registers to a specific broadcast service by his home operator (OP1) before travelling (step 2),
■ The home operator (OP1) sends to foreign operator (OP2) (step 5):
■ its identifier (Operator_ID (OP1)),
■ name of the specific broadcast service (service_ID),
■ list of Identifier for each program (Program_ID) specific broadcast service,
■ Content of each one of programs of the specific broadcast service.
• Foreign operator (OP2) builds an Electronic Service Guide (ESG) service for said specific broadcast service (step 6),
• The receiver of the end-user at the starting up connects itself to the said guide (ESG) bootstrap (step 7), and the new said guide (ESG) could then be proposed to the end-user (step 8).
• The acquisition of the said guide (ESG) data of the home operator (OP1) service begins (step 8).

3. The method according to anyone of claims 1 or 2 **characterized in that** it comprises the step of registration of said specific broadcast service before the terminal of the end-user has left the home communication network

4. The method according to anyone of above claims **characterized in that** it comprises:
• The foreign operator (OP2) builds an Electronic Service Guide (ESG) for said specific broadcast service except signaling information
• The foreign operator (OP2) builds a specific Electronic Service Guide (ESG), adding the signaling information given by an IP encapsulator of the said specific broadcast service and adds in its Electronic Service Guide (ESG) bootstrap the signaling of this specific Electronic Service Guide (ESG) with an identifier of the home operator (OP1) (Operator_ID, or provider_ID or ESG_provider_ID) provided by the home operator (OP1).

5. The method according to anyone of above claims **characterized in that** the home operator (OP1) proceeds to an aggregation of all registerings of the different end-users (step 4) and sends to foreign operator (OP2) data related to the aggregated registerings.

6. The method according to anyone of above claims **characterized in that** data are encrypted before exchange.

7. The method according to anyone of above claims **characterized in that** the terminal of the end-user registers without any end-user action when the said terminal leaves the home communication network.

8. The method according to anyone of above claims **characterized in that** during the registration step (step 2), the demand of registration indicates the timing period during which the said terminal (T) will be able to receive the programs.

9. The method according to anyone of above claims **characterized in that** the terminal (T) hosts a memory equipment (CP) which stores the said specific broadcast service so that the end-user can watch the service off-line.

10. The method according to the previous claim **characterized in that** the memory equipment is a personal token (CP) docked into the terminal (T).

11. A system to allow an end-user of a broadcast network to use his Mobile TV service when travelling in a foreign country **characterized in that** it comprises the following entities:
• A terminal (T) hosting a personal token (CP),
• A foreign operator (OP2) in the foreign country providing Mobile TV service and comprising an Electronic Service Guide (ESG) building module,
• The said ESG building module of the foreign operator (OP2) takes as an input some data which originate from the home operator (OP1), said data relating to a specific broadcast service the end-user has registered to (for the purpose of being broadcasted in the foreign country).
